# EUROPÄISCHE PATENTSCHRIFT

(11) **EP 3 503 683 B1**
(45) Veröffentlichungstag und Bekanntmachung des Hinweises auf die Patenterteilung: **29.07.2020**
(21) Anmeldenummer: 18207506.9
(22) Anmeldetag: 21.11.2018
(51) Int. Cl.: H05B 7/11, H01B 9/00, H01R 11/11, H02G 3/03, H02G 15/22, H01R 4/36, H01R 4/70

(54) **HOCHSTROMKABEL ZUR ELEKTRISCH LEITENDEN KONTAKTIERUNG EINES ELEKTRODENTRAGARMS EINES ELEKTRISCH BETRIEBENEN OFENS**
HIGH-CURRENT CABLE FOR ELECTRICALLY CONDUCTIVE CONTACTING OF AN ELECTRODE SUPPORT ARM OF AN ELECTRICALLY OPERATED FURNACE
CÂBLE HAUTE PUISSANCE DESTINÉ À LA MISE EN CONTACT ÉLECTRIQUEMENT CONDUCTRICE D'UN BRAS DE SUPPORT D'ÉLECTRODES D'UN FOUR ÉLECTRIQUE

(30) Priorität: 20.12.2017 DE 102017130637
(43) Veröffentlichungstag der Anmeldung: 26.06.2019
(73) Patentinhaber: Dung, Arndt, 58093 Hagen (DE)
(72) Erfinder: Dung, Arndt, 58093 Hagen (DE)
(74) Vertreter: Kalkoff & Partner Patentanwälte PartmbB

(56) Entgegenhaltungen:
- EP-A1- 0 511 609
- CN-A- 105 811 130
- DE-U1- 8 813 788

## Beschreibung

Die Erfindung betrifft ein Hochstromkabel zur elektrisch leitenden Kontaktierung eines Elektrodentragarms eines elektrisch betriebenen Ofens, mit
- einem an mindestens einem Ende eines Hochstromleiters angeordneten Kabelkopf und
- einem den Hochstromleiter und den Kabelkopf umgebenden Kabelmantel, der verdrehfest mit einer verdrehbar an dem Kabelkopf angeordneten Kopfhülse verbunden ist.

Hochstromkabel der eingangs genannten Art sind in vielfältigen Ausgestaltungen aus dem Stand der Technik bekannt. Diese werden beispielsweise dazu verwendet, um die Sekundärseite eines Transformators einer geeigneten Hochstromanlage mit einer Elektrode, bzw. einem Elektrodentragarm für eine Elektrode eines Pfannen- oder Lichtbogenofens oder einem anderen mit Starkstrom betriebenen Bauteil zu verbinden. Kleine Pfannenöfen weisen dabei typischerweise drei Phasen auf und sind mit zwei Hochstromkabeln pro Phase angeschlossen. Bei größeren Öfen werden gewöhnlich sogar vier oder mehr Hochstromkabel pro Phase verwendet. Zur Verbindung der Hochstromkabel weisen diese üblicherweise endseitig angeordnete Kabelköpfe mit geeigneten Anschlussmöglichkeiten, bspw. einem Anschlusskopf auf, welche eine zuverlässig elektrisch leitende Verbindung ermöglichen.

Die Hochstromkabel unterliegen im Betrieb erheblichen Belastungen. Abgesehen von einer hohen Strombelastbarkeit müssen die Hochstromkabel daher auch beständig gegenüber den von außen einwirkenden Temperaturen in den Schmelzbetrieben sowie gegenüber mechanischen Belastungen sein, denen die Kabel im Betrieb ausgesetzt sind. Neben einer Auslegung der Hochstromkabel derart, dass es auch bei größeren Zugkräften nicht zu einer Trennung des Kabelkopfs vor dem Hochstromleiter kommt, muss bspw. ausgeschlossen werden, dass es aufgrund der teilweise extrem beengten Platzverhältnisse und der üblicherweise durchhängenden Anordnung der Hochstromkabel bei einer unvermeidbaren Verdrehung der Hochstromkabel im Betrieb nicht zu Beschädigungen des Mantels kommt, die letztendlich zum Ausfall der Hochstromkabel führen.

Zur Erreichung dieser Anforderungen ist es bereits bekannt, den Kabelmantel drehbar an dem Kabelkopf anzuordnen. Aus der EP 0 511609 A1 ist ein gattungsgemäßes Hochstromkabel mit einem den Hochstromleiter und den Kabelkopf umgebenden Kabelmantel bekannt, der verdrehfest mit einer verdrehbar an dem Kabelkopf angeordneten Kabelhülse verbunden ist. Die DE 88 13 788 U1 und die CN 105 811 130 A betreffen wassergekühlte Hochstromkabel, deren Kühlwasserschläuche auf gegenüber den Anschlussstücken drehbeweglichen Hülsen festgelegt sind. In der DE 88 13 788 U1 sind zwischen den korrespondierenden Flächen des Anschlussstücks und der Hülse Gleitbänder bzw. Gleitscheiben aus gut wärmeleitendem Material eingefügt.

Die bekannten verdrehbaren Verbindungen weisen jedoch den Nachteil auf, dass es aufgrund der im Betrieb herrschenden Umwelteinflüsse, insbesondere bei einer hohen Staubbelastung, zu einem Eindringen von Verschmutzungen in die Drehverbindung kommt. Diese führt dann zu einer Blockierung der Verdrehbarkeit und damit im Betrieb aufgrund der bestehenden Belastung zu einem Ausfall des Hochstromkabels.

Hiervon ausgehend liegt der Erfindung die Aufgabe zugrunde, ein Hochstromkabel bereitzustellen, welches eine besonders und zudem dauerhaft zuverlässige verdrehbare Verbindung des Kabelmantels gegenüber dem Kabelkopf aufweist.

Die Erfindung löst die Aufgabe durch ein Hochstromkabel mit den Merkmalen des Anspruchs 1. Vorteilhafte Weiterbildungen des Hochstromkabels sind in den abhängigen Ansprüchen angegeben.

Kennzeichnend für das erfindungsgemäße Hochstromkabel ist, dass der Kabelkopf einen mit einer Zuführöffnung verbunden Schmiermittelkanal aufweist, der an einer Austrittsöffnung im Kontaktbereich von Kabelkopf und Kopfhülse endet.

Die Ausgestaltung des Kabelkopfes des Hochstromkabels mit einem Schmiermittelkanal ermöglicht es, bedarfsabhängig oder in festgelegten Wartungsintervallen über die Zuführ öffnung ein geeignetes Schmiermittel in den Kabelkopf einzubringen, welcher aus der Austrittsöffnung in den Kontaktbereich zwischen dem Kabelkopf und der Kopfhülse eintritt.

Durch diese Ausgestaltung der Erfindung kann eine dauerhafte und zuverlässige Verdrehbarkeit der Kopfhülse gegenüber dem Kabelkopf gewährleistet werden, sodass aufgrund der verdrehfesten Verbindung des Kabelmantels mit der Kopfhülse im Betrieb eine Verdrehbarkeit des Kabelmantels gegenüber dem Kabelkopf erreicht wird.

Der Verlauf des Schmiermittelkanals, insbesondere die Anordnung der Austrittsöffnung kann dabei grundsätzlich in beliebiger Weise erfolgen, wobei eine Anordnung der Austrittsöffnung bzw. Austrittsöffnungen bevorzugt wird, bei der in zuverlässiger Weise eine ausreichende Schmierung zwischen der Kopfhülse und dem Kabelkopf gewährleistet wird.

Nach einer besonders vorteilhaften Ausgestaltung der Erfindung ist jedoch vorgesehen, dass die Austrittsöffnung im Bereich eines Endes eines Gleitlagerabschnittes angeordnet ist, das von einer außenseitigen Stirnfläche des Kabelkopfes abgewandet ist.

Gemäß dieser Ausgestaltung der Erfindung erstreckt sich ein Gleitlagerabschnitt im Bereich zwischen dem Kabelkopf und der Kopfhülse in Längsachsenrichtung des Kabelkopfs. Die Austrittsöffnung ist gemäß dieser Weiterbildung der Erfindung dabei in einem Endbereich des Gleitlagerabschnitts angeordnet, welcher - in axialer Richtung des Kabelkopfes betrachtet - von der Stirnfläche des Kabelkopfes abgewandt ist. D. h. in axialer Richtung betrachtet befindet sich die Austrittsöffnung im Bereich des der Stirnfläche gegenüberliegenden Endes des Gleitlagerabschnitts.

Durch diese Ausgestaltung der Erfindung wird - insbesondere bei einer Anordnung des Gleitlagerabschnitts derart, dass dieser im Wesentlichen an die außenseitige Stirnfläche angrenzt - erreicht, dass bei einer Zuführung von Schmiermittel über die Zuführöffnung dieses aufgrund der mit Druck erfolgenden Einbringung über die Austrittsöffnung in den Gleitlagerabschnitt eintritt und von dort aus wiederum aufgrund des Förderdrucks über die außenseitige Stirnfläche im Bereich zwischen der Kopfhülse und dem Kabelkopf wieder austritt.

Eine kontinuierliche Schmiermittelzuführung mit einem gewollten Austritt im Bereich der Stirnfläche des Kabelkopfes führt dann neben einer guten Schmierung ferner dazu, dass im Betrieb in den Bereich zwischen Kabelkopf und Kopfhülse eingedrungene Verschmutzungen mit dem geförderten Schmiermittel aus diesem Bereich hinausbefördert werden. Hierdurch wird in besonders zuverlässiger Weise eine Verdrehbarkeit der Kopfhülse gegenüber dem Kabelkopf und somit des Kabelmantels gegenüber dem Kabelkopf gewährleistet.

Nach einer weiteren Ausgestaltung der Erfindung ist vorgesehen, dass der Kabelkopf einen an seiner außenseitigen Stirnfläche befestigten Deckel mit einer korrespondierend zur Zutrittsöffnung angeordneten Schmiermittelöffnung aufweist. Der stirnseitig an dem Kabelkopf anliegende Deckel, wobei dieser bevorzugt mit dem Kabelkopf verschraubt ist, verhindert in ergänzender Weise das Eindringen von Verschmutzungen in den Bereich zwischen der Kopfhülse und dem Kabelkopf, erlaubt gleichzeitig jedoch auch den Austritt von Schmiermittel aus dem Bereich zwischen Kopfhülse und Kabelkopf und damit eine Entformung eingedrungener Verschmutzungen. Zudem ermöglicht der Deckel eine einfache Ausgestaltung einer Schmiermittelöffnung, welche zum Anschluss einer geeigneten Schmiermittelzuführvorrichtung ausgebildet ist.

Besonders bevorzugt ist dabei die Schmiermittelöffnung mit einem Schmiernippel versehen, welcher den Anschluss standardisierter Schmiermittelzuführvorrichtungen ermöglicht. Die Anordnung des Deckels derart, dass die Schmiermittelöffnung korrespondierend zur Zutrittsöffnung an dem Kabelkopf angeordnet ist, gewährleistet dabei in besonders zuverlässiger Weise, dass das zugeführte Schmiermittel über den Schmiermittelkanal in den Bereich zwischen der Kopfhülse und dem Kabelkopf gelangt. Der Deckel, welcher bevorzugt mit dem Kabelkopf verschraubt ist, dient ferner bei einer Ausgestaltung, bei der dieser sich radial über die Kopfhülse hinaus erstreckt, zur ergänzenden axialen Lagesicherung der Kopfhülse an dem Kabelkopf.

Die Befestigung des Kabelmantels an der Kopfhülse kann grundsätzlich in beliebiger Weise erfolgen, wobei bevorzugt der Kabelmantel mittels Schellenbändern an der Kopfhülse klemmend befestigt wird. Zur Verbesserung der Verbindung zwischen den Kabelmantel und der Kopfhülse ist nach einer Weiterbildung der Erfindung vorgesehen, dass die Kopfhülse an ihrem außenseitigen Umfang eine Profilierung, insbesondere eine Verzahnung aufweist. Diese Ausgestaltung der Erfindung gewährleistet in besonders zuverlässiger Weise eine abziehsichere Verbindung des Kabelmantels an der Kopfhülse. Insbesondere unter Verwendung von Schellenbändern wird erreicht, dass die Profilierung in die Innenfläche des Mantels eingreift und so zu einer zuverlässigen Verbindung führt.

Die Anordnung der Kopfhülse an dem Kabelkopf kann grundsätzlich in beliebiger Weise erfolgen. Nach einer besonders vorteilhaften Ausgestaltung der Erfindung ist jedoch vorgesehen, dass die Kopfhülse an ihrer der außenseitigen Stirnfläche des Kabelkopfs abgewandten Stirnfläche an einem Führungsabsatz am Kabelkopf abgestützt ist. Gemäß dieser Ausgestaltung der Erfindung ist die Kopfhülse in axialer Richtung an einem Absatz des Kabelkopfs abgestützt und damit in Aufschieberichtung der Kopfhülse auf dem Kabelkopf axial festgelegt. Diese Ausgestaltung bietet neben einer axialen Sicherung der Kopfhülse in Aufschieberichtung auf den Kabelkopf ferner die Möglichkeit, über den Führungsabsatz eine Anordnung der Kopfhülse an dem Kabelkopf zu realisieren, bei dem die Außenseite der Kopfhülse im Wesentlichen flächenbündig zum weiteren Umfang des Kabelkopfes angeordnet ist, sodass der Kabelmantel über die gesamte axiale Erstreckung des Kabelkopfs, d. h. sowohl über den Bereich an dem die Kopfhülse angeordnet ist, als auch im kopfhülsenfreien Bereich, flächenbündig an dem Kabelkopf bzw. der Kopfhülse anliegt.

Zur ergänzenden Verbesserung der Verdrehbarkeit der Kopfhülse gegenüber dem Führungsabsatz ist nach einer besonders vorteilhaften Weiterbildung der Erfindung vorgesehen, dass im Bereich zwischen dem Führungsabsatz und der dem Führungsabsatz gegenüberliegenden Stirnfläche der Kopfhülse ein Führungsring angeordnet ist. Dieser Führungsring kann besondere Gleiteigenschaften aufweisen, sodass eine besonders gute Verdrehbarkeit bei gleichzeitig guter axialer Abstützung erreicht wird.

Die verdrehbare Lagerung der Kopfhülse an dem Kabelkopf kann grundsätzlich in beliebiger Weise erfolgen, wobei in der einfachsten Ausgestaltung der Erfindung eine einfache Gleitlagerung zwischen den Berührungsflächen der Kopfhülse und dem Kabelkopf vorgesehen ist, bei der bspw. der gemäß einer vorteilhaften Weiterbildung der Erfindung vorgesehene Gleitlagerabschnitt sich über einen vorbestimmten Bereich in axialer Richtung des Kabelkopfes erstreckt.

Nach einer besonders vorteilhaften Ausgestaltung der Erfindung ist jedoch vorgesehen, dass - in Längsachsenrichtung des Kabelkopfes betrachtet - im Bereich zwischen dem Führungsabsatz und dem Gleitlagerabschnitt zwischen der Kopfhülse und dem Kabelkopf mindestens ein Führungsband und/oder ein O-Ring angeordnet ist, welche besonders bevorzugt in hierfür vorgesehenen Ausnehmungen an dem Kabelkopf angeordnet sind.

Die zusätzliche Verwendung von einem oder mehreren Führungsbändern verbessert die Gleiteigenschaften zwischen dem Kabelkopf und der Kopfhülse in ergänzender Weise. Die Anordnung der Führungsbänder erfolgt dabei vorteilhafter Weise derart, dass diese, ausgehend von dem Deckel in Richtung auf den Hochstromleiter betrachtet, hinter dem vorteilhafterweise vorgesehenen Gleitlagerabschnitt angeordnet sind, sodass in besonders zuverlässiger Weise gewährleistet ist, dass bei der Anordnung eines Gleitlagerabschnitt über die Schmiermittelzuführung Verschmutzungen aus dem Bereich zwischen dem Kabelkopf und der Kopfhülse hinausbefördert werden können.

Die Verwendung von O-Ringen erhöht die Abdichtung gegen eindringenden Schmutz und dient bei einer möglichen Flüssigkeitskühlung des Hochstromkabels dazu, dass das verwendete Kühlmittel nicht aus dem Bereich zwischen dem Kabelmantel und dem Kabelkopf austritt.

Für eine gemäß einer Weiterbildung der Erfindung vorgesehenen Kühlung des Hochstromkabels ist nach einer weiteren Ausgestaltung der Erfindung vorgesehen, dass der Kabelkopf einen Kühlkanal für die Durchleitung von Kühlflüssigkeit aufweist. Diese Ausgestaltung der Erfindung ermöglicht es, über den Kabelkopf Kühlflüssigkeit in das Hochstromkabel einzuführen, sodass die im Betrieb auf das Hochstromkabel wirkenden thermischen Belastungen reduziert werden können. Die Zuführung der Kühlflüssigkeit in den Kühlkanal des Kabelkopfes erfolgt dabei nach einer besonders vorteilhaften Ausgestaltung über einen mit dem Kabelkopf verbundenen Anschlusskopf, welcher axial an den Kabelkopf angeschlossen ist, sodass eine Verdrehbarkeit des Kabelmantels mit der Kopfhülse gegenüber dem Kabelkopf nicht eingeschränkt ist. Bei dieser Ausgestaltung der Erfindung ist ein besonders vorteilhafterweise vorgesehener Deckel koaxial zu dem Anschlusskopf angeordnet, wodurch in ergänzender Weise die Verdrehbarkeit nicht eingeschränkt wird, gleichzeitig jedoch eine zuverlässige, axiale Zuführung von Kühlflüssigkeit ermöglicht wird.

Ein Ausführungsbeispiel der Erfindung wird nachstehend mit Bezug auf die Zeichnungen erläutert. In den Zeichnungen zeigen:

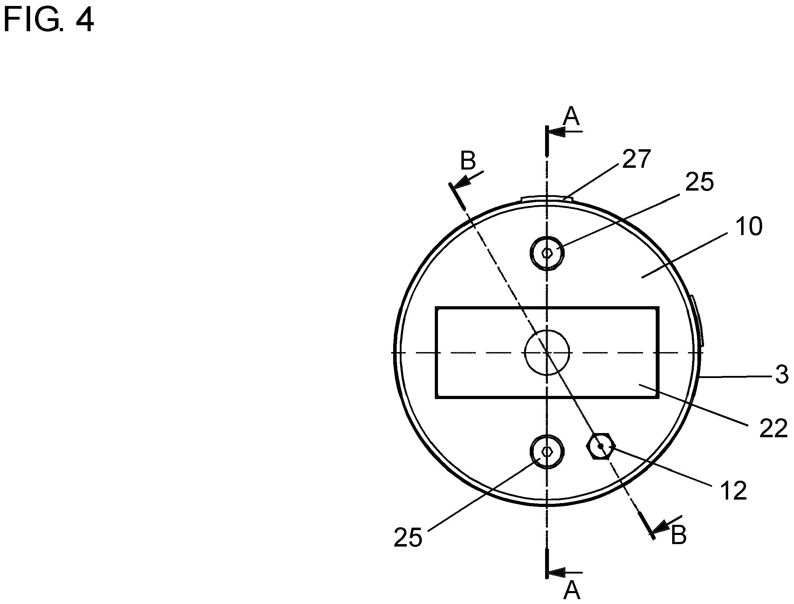

- Figur 1: eine Ansicht eines Schnitts eines Hochstromkabels im Bereich eines Kabelkopfs entlang der Schnittlinie A-A von Figur 4;
- Figur 2: eine Ansicht eines Schnitts des Hochstromkabels von Figur 1 im Bereich eines Kabelkopfs entlang der Schnittlinie B-B von Figur 4;
- Figur 3: eine Schnittansicht des Ausschnitts C von Figur 2 und
- Figur 4: eine Draufsicht auf das Hochstromkabel von Figur 1.

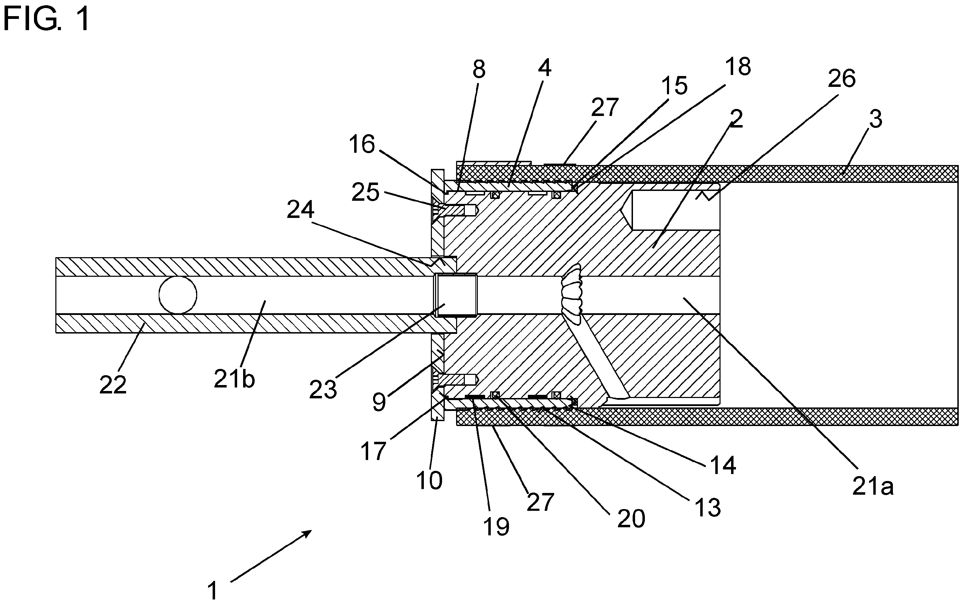

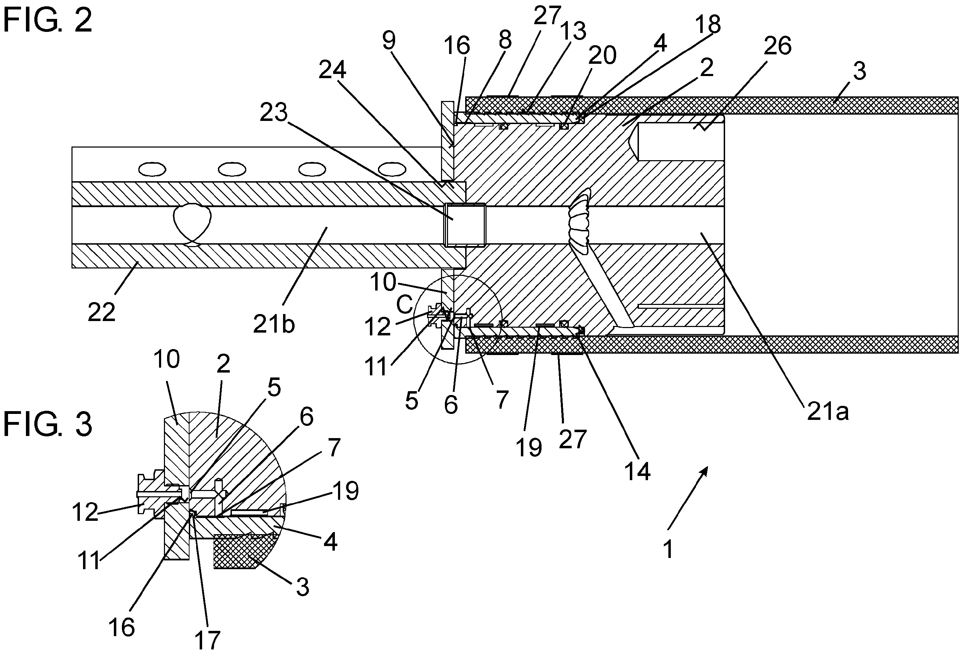

Ein in den Figuren 1 und 2 im Bereich eines Endabschnitts dargestelltes Hochstromkabel 1 weist zum Anschluss an einen bspw. hier nicht dargestellten Elektrodentragarm oder einen Transformator einen Kabelkopf 2 mit einem sich von einer außenseitigen Stirnfläche 9 des Kabelkopfs 2 aus erstreckenden Anschlusskopf 22 auf. Der Anschlusskopf 22 weist zur Verbindung mit bspw. dem Elektrodenarm oder Transformator mehrere Anschlussöffnungen 28 auf, die zur Aufnahme geeigneter Befestigungsmittel wie Befestigungsschrauben ausgebildet sind. Im dargestellten Ausführungsbeispiel ist dabei der Anschlusskopf 22 nicht einstückig mit dem Kabelkopf 2 ausgebildet, sondern mit diesem über eine koaxial zur Kabelkopflängsachse angeordnete Zentrierbuchse 23 verbunden.

Zur Weiterleitung des in das Hochstromkabel 1 über den Anschlusskopf 22 und den Kabelkopf 2 eingebrachten Stroms ist der Kabelkopf 2 mit mehreren, hier nicht dargestellten Hochstromleitern verbunden, welche in hierfür vorgesehenen Leiteraufnahmen 26 des Kabelkopfs 2 befestigt sind. Die Hochstromleiter sowie der Kabelkopf 2 sind koaxial von einem Kabelmantel 3 umgeben, welcher das Innere des Hochstromkabels 1 gegenüber der Umgebung abdichtet.

Im Bereich des Kabelkopfes 2 verläuft der Kabelmantel 3 koaxial zu dem Kabelkopf 2 sowie zu einer drehbar an dem Kabelkopf 2 angeordneten Kopfhülse 4. Die Verbindung zwischen der Kopfhülse 4 und dem Kabelmantel 3 erfolgt dabei über umfangsseitig im Bereich der Kopfhülse 4 an dem Kabelmantel 3 anliegende Schellenbänder 27, mittels derer der Kabelmantel 3 im Bereich der Kopfhülse 4 radial an die Kopfhülse 4 gedrückt und dort festgeklemmt wird. Eine an der Umfangsfläche der Kopfhülse 4 angeordnete Verzahnung 13 gewährleistet dabei eine in axialer Richtung zuverlässige Festlegung des Kabelmantels 3 an der Kopfhülse 4.

Die Kopfhülse 4 liegt in axialer Richtung mit einer Stirnfläche 15 an einem Führungsring 18 an, gegenüber dem die Kopfhülse 4 verdrehbar gelagert ist und der seinerseits auf einem Führungsabsatz 14 des Kabelkopfs 2 aufliegt. In radialer Richtung gewährleisten zwei umlaufende Führungsbänder 19 sowie ein Gleitlagerabschnitt 8, die in axialer Richtung im Abstand voneinander angeordnet sind, eine gute Verdrehbarkeit der Kopfhülse 4 gegenüber dem Kabelkopf 2. Angrenzend an die Führungsbänder 19 ist dabei jeweils ein O-Ring 20 angeordnet, welcher das Innere des Hochstromkabels 1 gegenüber der Umgebung abdichten.

Der Gleitlagerabschnitt 8 verläuft - in axialer Richtung ausgehend von der Stirnfläche des Kabelkopfes 2 betrachtet - in einem Bereich zwischen der außenseitigen Stirnfläche 9 des Kabelkopfes 2 und einem ersten Führungsband 19. Ein Schmiermittelkanal 6 innerhalb des Kabelkopfes 2 erstreckt sich dabei ausgehend von einer Zuführöffnung 5 im Bereich der außenseitigen Stirnfläche 9 des Kabelkopfes 2 bis zu einer Austrittsöffnung 7, welche im Bereich des Gleitlagerabschnitts 8 endet.

Zur Zuführung eines Schmiermittels weist der mit dem Kabelkopf 2 über Deckelschrauben 25 verbundenen Deckel 10 eine Schmiermittelöffnung 11 auf, die mit einem Schmiernippel 12 versehen ist. Der Schmiernippel 12 ermöglicht die komfortable Zuführung von Schmiermittel über eine hier nicht dargestelltes Schmiermittelzuführvorrichtung. Mittels dieser kann Schmiermittel über den Schmiermittelkanal 6 in den Gleitlagerabschnitt 8 eingebracht werden.

Eine kontinuierliche Zuführung des Schmiermittels bewirkt neben einer Schmierung des Gleitlagerabschnitts 8 zudem einen Schmiermittelstrom ausgehend von der Austrittsöffnung 7 in Richtung auf den Kontaktbereich von Kopfhülse 4 und Kabelkopf 2 im Bereich der außenseitigen Stirnfläche 9, wo eingedrungene Verschmutzungen gemeinsam mit dem Schmiermittel herausbefördert werden.

Zur ergänzenden axialen Lagesicherung der Kopfhülse 4 an dem Kabelkopf 2 weist die Kopfhülse 4 einen radial nach innen vorstehenden, umlaufenden Flansch 16 auf, welcher an einem Absatz 17 des Kabelkopfs 2 anliegt. Über den in axialer Richtung an der Kopfhülse 4 anliegenden Deckel 10 wird somit zusätzlich zur Verbindung von Kabelmantel 3 und Kopfhülse 4 ein Abrutschen der Kopfhülse 4 von dem Kabelkopf 2 verhindert.

Zur Kühlung des Hochstromkabels 1 weist der Kabelkopf 2 einen Kühlkanal 21a auf, über den hier nicht dargestellte Kühlflüssigkeit in das Hochstromkabel 1 eingebracht werden kann. Vorliegend erfolgt die Zuführung dabei über den flüssigkeitsdicht mit dem Kabelkopf 2 verbundenen Anschlusskopf 22, welcher über die Zentrierbuchse 23 mit dem Kühlkanal 21a des Kabelkopfes 2 über einen Kühlkanal 21b verbunden ist. Der Anschlusskopf 22 erstreckt sich dabei durch eine Öffnung 24 des Deckels 10.

### Bezugszeichenliste

- 1: Hochstromkabel
- 2: Kabelkopf
- 3: Kabelmantel
- 4: Kopfhülse
- 5: Zuführöffnung
- 6: Schmiermittelkanal
- 7: Austrittsöffnung
- 8: Gleitlagerabschnitt
- 9: außenseitige Stirnfläche
- 10: Deckel
- 11: Schmiermittelöffnung
- 12: Schmiernippel
- 13: Profilierung/Verzahnung
- 14: Führungsabsatz
- 15: Stirnfläche (Hülse-Führungsabsatz)
- 16: Flansch (Hülse)
- 17: Absatz
- 18: Führungsring
- 19: Führungsband
- 20: O-Ring
- 21a, 21b: Kühlkanal
- 22: Anschlusskopf
- 23: Zentrierbuchse
- 24: Öffnung
- 25: Deckelschrauben
- 26: Leiteraufnahme
- 27: Schellenband

## Patentansprüche

1. Hochstromkabel (1) zur elektrisch leitenden Kontaktierung eines Elektrodentragarms eines elektrisch betriebenen Ofens, mit
- einem an mindestens einem Ende eines Hochstromleiters angeordneten Kabelkopf (2) und
- einem den Hochstromleiter und den Kabelkopf (2) umgebenden Kabelmantel (3), der verdrehfest mit einer verdrehbar an dem Kabelkopf (2) angeordneten Kopfhülse (4) verbunden ist,
**dadurch gekennzeichnet, dass**
der Kabelkopf (2) einen mit einer Zuführöffnung (5) verbundenen Schmiermittelkanal (6) aufweist, der an einer Austrittsöffnung (7) im Kontaktbereich von Kabelkopf (2) und Kopfhülse (4) endet.

2. Hochstromkabel (1) nach Anspruch 1, **dadurch gekennzeichnet, dass** die Austrittsöffnung (7) im Bereich eines von einer außenseitigen Stirnfläche (9) des Kabelkopfes (2) abgewandten Endes eines Gleitlagerabschnitts (8) angeordnet ist.

3. Hochstromkabel (1) nach Anspruch 2, **dadurch gekennzeichnet, dass** der Kabelkopf (2) einen an der außenseitigen Stirnfläche (9) befestigten Deckel (10) mit einer korrespondierend zur Zuführöffnung (5) angeordneten Schmiermittelöffnung (11) aufweist.

4. Hochstromkabel (1) nach Anspruch 3, **dadurch gekennzeichnet, dass** die Schmiermittelöffnung (11) einen Schmiernippel (12) aufweist.

5. Hochstromkabel (1) nach einem oder mehreren der vorhergehenden Ansprüche, **dadurch gekennzeichnet, dass** die Kopfhülse (4) an ihrem außenseitigen Umfang eine Profilierung, insbesondere eine Verzahnung (13) aufweist.

6. Hochstromkabel (1) nach einem oder mehreren der vorhergehenden Ansprüche 2-5, **dadurch gekennzeichnet, dass** die Kopfhülse (4) an ihrer der außenseitigen Stirnfläche (9) des Kabelkopfs (2) abgewandten Stirnfläche (15) an einem Führungsabsatz (14) am Kabelkopf (2) abgestützt ist.

7. Hochstromkabel (1) nach Anspruch 6, **dadurch gekennzeichnet, dass** im Bereich zwischen dem Führungsabsatz (14) und der Stirnfläche (15) der Kopfhülse (4) ein Führungsring (18) angeordnet ist.

8. Hochstromkabel (1) nach einem oder mehreren der vorhergehenden Ansprüche 6-7, **dadurch gekennzeichnet, dass** in Längsachsenrichtung des Kabelkopfs (2) betrachtet, im Bereich zwischen dem Führungsabsatz (14) und dem Gleitlagerabschnitt (8) zwischen der Kopfhülse (4) und dem Kabelkopf (2) mindestens ein Führungsband (19) und/oder ein O-Ring (20) angeordnet sind.

9. Hochstromkabel (1) nach einem oder mehreren der vorhergehenden Ansprüche, **dadurch gekennzeichnet, dass** der Kabelkopf (2) einen Kühlkanal (21a) für die Durchleitung von Kühlflüssigkeit aufweist.

10. Hochstromkabel (1) nach einem oder mehreren der vorhergehenden Ansprüche, **dadurch gekennzeichnet, dass** der Kabelkopf (2) mit einem Anschlusskopf (22) verbunden ist.

## Claims

1. A high-current cable (1) for the electrically conductive contacting of an electrode support arm of an electrically operated furnace, having
- a cable head (2) arranged at at least one end of a high-current conductor, and
- a cable sheath (3) surrounding the high-current conductor and the cable head (2), said cable sheath being connected in a torsion-resistant manner to a head sleeve (4) twistably arranged on the cable head (2),
**characterized in that**
the cable head (2) has a lubricant duct (6) connected to a supply opening (5), said lubricant duct ending at an outlet opening (7) in the contact region of the cable head (2) and head sleeve (4).

2. The high-current cable (1) according to claim 1, **characterized in that** the outlet opening (7) is arranged in the region of an end of a slide bearing portion (8) facing away from an external end face (9) of the cable head (2).

3. The high-current cable (1) according to claim 2, **characterized in that** the cable head (2) has a lid (10) fastened to the external end face (9), which has a lubricant opening (11) arranged correspondingly to the supply opening (5).

4. The high-current cable (1) according to claim 3, **characterized in that** the lubricant opening (11) has a lubricating nipple (12).

5. The high-current cable (1) according to one or more of the preceding claims, **characterized in that** the head sleeve (4) has a profiling, in particular a toothing (13), on its external periphery.

6. The high-current cable (1) according to one or more of the preceding claims 2-5, **characterized in that** the head sleeve (4), at its end face (15) facing away from the external end face (9) of the cable head (2), is supported on a guide shoulder (14) on the cable head (2).

7. The high-current cable (1) according to claim 6, **characterized in that** a guide ring (18) is arranged in the region between the guide shoulder (14) and the end face (15) of the head sleeve (4).

8. The high-current cable (1) according to one or more of the preceding claims 6-7, **characterized in that**, viewed in the longitudinal axis direction of the cable head (2), at least one guide strip (19) and/or an O-ring (20) is/are arranged in the region between the guide shoulder (14) and the slide bearing portion (8) between the head sleeve (4) and the cable head (2).

9. The high-current cable (1) according to one or more of the preceding claims, **characterized in that** the cable head (2) has a cooling duct (21a) for conducting cooling liquid.

10. The high-current cable (1) according to one or more of the preceding claims, **characterized in that** the cable head (2) is connected to a connecting head (22).

## Revendications

1. Câble haute puissance (1) destiné à la mise en contact électriquement conductrice d'un bras de support d'électrodes d'un four électrique, comprenant
- une tête de câble (2) disposée au moins à une extrémité d'un conducteur haute puissance, et
- une gaine de câble (3) entourant le conducteur haute puissance et la tête de câble (2), laquelle est reliée de façon solidaire en rotation à une douille de tête (4) disposée de façon rotative sur la tête de câble (2),
**caractérisé en ce que**
- la tête de câble (2) présente un canal de lubrifiant (6) relié à une ouverture d'alimentation (5), lequel se termine au niveau d'une ouverture de sortie (7) dans la région de contact entre la tête de câble (2) et la douille de tête (4) .

2. Câble haute puissance (1) selon la revendication 1, **caractérisé en ce que** l'ouverture de sortie (7) est disposée dans la région d'une extrémité d'une section de palier lisse (8) opposée à une surface frontale côté extérieur (9) de la tête de câble (2).

3. Câble haute puissance (1) selon la revendication 2, **caractérisé en ce que** la tête de câble (2) présente un couvercle (10) fixé à la surface frontale côté extérieur (9), avec une ouverture de lubrifiant (11) disposée en correspondance avec l'ouverture d'alimentation (5).

4. Câble haute puissance (1) selon la revendication 3, **caractérisé en ce que** l'ouverture de lubrifiant (11) présente un graisseur (12).

5. Câble haute puissance (1) selon l'une ou plusieurs des revendications précédentes, **caractérisé en ce que** la douille de tête (4) présente un profilage sur son pourtour côté extérieur, en particulier une denture (13).

6. Câble haute puissance (1) selon l'une ou plusieurs des revendications précédentes 2 à 5, **caractérisé en ce que** la douille de tête (4) s'appuie sur un talon de guidage (14) sur la tête de câble (2) sur sa surface frontale (15) opposée à la surface frontale côté extérieur (9) de la tête de câble (2).

7. Câble haute puissance (1) selon la revendication 6, **caractérisé en ce qu'**un anneau de guidage (18) est disposé dans la région entre le talon de guidage (14) et la surface frontale (15) de la douille de tête (4).

8. Câble haute puissance (1) selon l'une ou plusieurs des revendications précédentes 6 à 7, **caractérisé en ce qu'**au moins une bande de guidage (19) et/ou un joint torique (20) sont disposés dans la région entre le talon de guidage (14) et la section de palier lisse (8), entre la douille de tête (4) et la tête de câble (2), vu dans la direction de l'axe longitudinal de la tête de câble (2).

9. Câble haute puissance (1) selon l'une ou plusieurs des revendications précédentes, **caractérisé en ce que** la tête de câble (2) présente un canal de refroidissement (21a) pour le passage de liquide de refroidissement.

10. Câble haute puissance (1) selon l'une ou plusieurs des revendications précédentes, **caractérisé en ce que** la tête de câble (2) est reliée à une tête de raccordement (22).
